# EUROPÄISCHE PATENTSCHRIFT

(11) **EP 4 239 310 B1**
(45) Veröffentlichungstag und Bekanntmachung des Hinweises auf die Patenterteilung: **23.07.2025**
(21) Anmeldenummer: 23159015.9
(22) Anmeldetag: 28.02.2023
(51) Int. Cl.: G01M 17/06

(54) **ACHSSPIELTESTVORRICHTUNG**
AXLE CLEARANCE TEST DEVICE
DISPOSITIF DE TEST DU JEU DES ESSIEUX

(30) Priorität: 04.03.2022 DE 102022105193
(43) Veröffentlichungstag der Anmeldung: 06.09.2023
(73) Patentinhaber: Cartesy GmbH, 84453 Mühldorf Bayern (DE)
(72) Erfinder: FEMBÖCK, Josef, 84524 Neuötting (DE)
(74) Vertreter: Lichtnecker, Markus Christoph

(56) Entgegenhaltungen:
- EP-B1- 2 339 319
- DE-A1- 102020 113 739

## Beschreibung

Die Erfindung betrifft eine Achsspieltestvorrichtung zum Testen des Achsspiels eines Fahrzeugs, vorzugsweise Lastkraftwagens, aufweisend eine Auflage für einen Reifen des Fahrzeugs, eine Lagerung für die Auflage und wenigstens einen mit einem Hydraulikaggregat verbundenen Hydraulikzylinder zum Bewegen der Auflage.

Derartige Achsspieltestvorrichtungen sind grundsätzlich bekannt. Diese dienen dazu, das Achsspiel eines Fahrzeugs zu testen. Dabei wird ein Reifen, welcher sich auf einer Auflage befindet, möglichst schnell hin und her bewegt. Von einer Grube aus kann ein Benutzer beispielsweise mit einer Taschenlampe die Bewegung beobachten und bei dieser visuellen Inspektion erkennen, ob sich das Achsspiel im zulässigen Rahmen befindet.

Typischerweise sind pro Auflage vier Hydraulikzylinder vorgesehen. Jeder der Hydraulikzylinder wird herkömmlich durch eine separate Hydraulikleitung versorgt.

Die Hydraulikleitungen sind mit einem Hydraulikaggregat verbunden. Im Hydraulikaggregat wird mittels einer Pumpe ein Druck erzeugt. Öffnet sich ein Ventil des Hydraulikaggregats, kann die unter Druck stehende Hydraulikflüssigkeit, z.B. Öl, in eine Hydraulikleitung fließen, um schließlich den mit der Hydraulikleitung verbundenen Hydraulikzylinder zu betätigen.

DE 10 2020 113739 A1 offenbart einen Lastsimulationsprüfstand. Das Druckregelungssystem kann ein Ventil aufweisen.

EP 2 339 319 B1 betrifft eine Achsspieltestvorrichtung gemäß dem Oberbegriff des Anspruchs 1.

Nachteilig daran ist, dass eine schnelle Bewegung des Hydraulikzylinders nicht möglich ist, da dieser nicht unmittelbar anspricht. So muss nach dem Öffnen des Ventils nämlich stets zunächst die Hydraulikleitung unter Druck gesetzt werden, damit schließlich der Hydraulikzylinder betätigt werden kann. Dies führt zu einer gewissen Trägheit.

Es ist daher eine Aufgabe der Erfindung, eine Achsspieltestvorrichtung sowie ein Verfahren zum Testen des Achsspiels eines Fahrzeugs zu schaffen, welche/s ein schnelles Ansprechverhalten aufweist.

Die Lösung dieser Aufgabe erfolgt durch die Vorrichtung sowie das Verfahren der unabhängigen Ansprüche.

Erfindungsgemäß ist die Achsspieltestvorrichtung zum Testen des Achsspiels eines Fahrzeugs ausgebildet und/oder kann hierzu verwendet werden.

Bei dem Fahrzeug kann es sich vorzugsweise um einen Lastkraftwagen, ein Wohnmobil, einen Bus, einen PKW und/oder einen Anhänger handeln.

Die Achsspieltestvorrichtung weist eine Auflage für einen Reifen des Fahrzeugs auf.

Ferner weist die Achsspieltestvorrichtung eine Lagerung für die Auflage auf.

Vorzugsweise ermöglicht die Lagerung eine Bewegung in mindestens zwei Dimensionen, beispielsweise in X- und Y-Richtung. So kann die Auflage z.B. in X- und Y-Richtung jeweils vor- und zurückbewegt werden. Beispielsweise kann es sich bei der Lagerung um einen Schlitten handeln.

Die Achsspieltestvorrichtung weist wenigstens einen mit einem Hydraulikaggregat verbundenen oder verbindbaren Hydraulikzylinder zum Bewegen der Auflage auf.

Beispielsweise ist der Hydraulikzylinder über eine Hydraulikleitung, z.B. einen Schlauch oder ein Rohr, mit dem Hydraulikaggregat verbunden oder verbindbar.

Vorzugsweise sind wenigstens zwei Hydraulikzylinder vorgesehen, um die Auflage in zwei Dimensionen, beispielsweise in X- und Y-Richtung, bewegen zu können.

Die Achsspieltestvorrichtung weist zumindest einen Druckspeicher zum unmittelbaren Betätigen des Hydraulikzylinders auf.

Vorzugsweise ist der Druckspeicher zwischen dem Hydraulikaggregat und dem Hydraulikzylinder angeordnet.

Der Druckspeicher kann beispielsweise durch eine dehnbare Hydraulikleitung, z.B. Hydraulikschlauch, gebildet werden. Alternativ oder zusätzlich kann auch ein, z.B. zur Hydraulikleitung, separater Druckspeicher vorgesehen sein.

Durch den Druckspeicher wird beispielsweise erreicht, dass der Hydraulikzylinder unmittelbar angesprochen werden kann. Es muss somit nicht erst gewartet werden, bis das Hydraulikaggregat den nötigen Druck aufbaut.

Schließlich weist die Achsspieltestvorrichtung ein Ventil, z.B. Magnetventil, auf, das zwischen dem Druckspeicher und dem Hydraulikzylinder angeordnet ist.

Bevorzugt ist das Ventil ein Bestandteil der Achsspieltestvorrichtung-Baugruppe.

Die Steuerung des Ventils bzw. des Hydraulikzylinders kann beispielsweise über eine Fernbedienung erfolgen. Die Fernbedienung kann vorzugsweise in eine Taschenlampe integriert sein.

Wird die Fernbedienung betätigt, kann sich das Ventil öffnen. Durch den Druckspeicher steht für den Hydraulikzylinder ohne Trägheitsverluste unmittelbar der für die Betätigung des Hydraulikzylinders benötigte Druck zur Verfügung.

Die Achsspieltestvorrichtung weist somit ein schnelles Ansprechverhalten auf, da nicht erst gewartet werden muss, bis sich der Druck vom Hydraulikaggregat über die Hydraulikleitung bis zum Hydraulikzylinder aufbaut.

Die erfindungsgemäße Achsspieltestvorrichtung ist vorzugsweise mobil und/oder kann bei bestehenden Gruben eingesetzt werden.

Weiterbildungen der Erfindung sind auch den abhängigen Ansprüchen, der Beschreibung sowie den beigefügten Zeichnungen zu entnehmen.

Gemäß einer Ausführungsform ist das Ventil unmittelbar vor dem Hydraulikzylinder angeordnet.

Das Ventil ist daher nach der unter Druck stehenden Hydraulikleitung platziert. Es muss zum Betätigen des Hydraulikzylinders daher nicht zunächst der Widerstand der Hydraulikleitung überwunden werden.

Der Hydraulikzylinder wird daher, ohne Trägheit, sofort angesprochen und/oder betätigt.

Dies ermöglicht beispielsweise ein schnelles Hin- und Herschalten.

Nach einer weiteren Ausführungsform ist der Druckspeicher als Federspeicher ausgebildet.

Bei einem Federspeicher kann über die Hydraulik eine Feder gespannt werden. Dazu kann z.B. ein Rückschlagventil vorgesehen sein. Sollte der Hydraulikzylinder betätigt werden, entspannt sich die Feder und Druck wird an den Hydraulikzylinder weitergegeben.

Alternativ oder zusätzlich zu einem Federspeicher kann beispielsweise ein Gummiballon vorgesehen sein, welcher mit der Hydraulikflüssigkeit gefüllt und somit unter Druck gesetzt wird. Wird das Ventil geöffnet, kann die Hydraulikflüssigkeit aus dem Gummiballon fließen und den Hydraulikzylinder betätigen.

Alternativ oder zusätzlich zu einem separaten Druckspeicher kann die Schlauchdehnung der Hydraulikleitung als Druckspeicher dienen. Dies ist vor allem dann möglich, wenn die Hydraulikleitung als Schlauch ausgebildet ist. Wird die Hydraulikleitung hingegen durch ein starres Rohr gebildet, ist ein separater Druckspeicher notwendig.

Gemäß einer weiteren Ausführungsform sind wenigstens oder genau zwei, drei oder vier Hydraulikzylinder vorgesehen.

Vorzugsweise sind die Hydraulikzylinder derart angeordnet, dass die Auflage in X- und Y-Richtung bewegbar ist.

Ein Hydraulikzylinder kann beispielsweise für eine Hin-Bewegung in X-Richtung zuständig sein und ein weiterer Hydraulikzylinder für eine Rück-Bewegung in X-Richtung.

Ferner kann ein Hydraulikzylinder beispielsweise für eine Hin-Bewegung in Y-Richtung zuständig sein und ein weiterer Hydraulikzylinder für eine Rück-Bewegung in Y-Richtung.

Die Hydraulikzylinder, welche für die Bewegungen in X-Richtung zuständig sind, können gegenüber den Hydraulikzylindern, welche für die Bewegungen in Y-Richtung zuständig sind, um 90° zueinander versetzt sein.

Vorzugsweise weist jeder Hydraulikzylinder einen separaten Druckspeicher auf. Alternativ kann auch ein Druckspeicher für mehrere, vorzugsweise sämtliche, Hydraulikzylinder zuständig sein.

Nach einer weiteren Ausführungsform sind, bei Vorliegen von wenigstens vier Hydraulikzylindern, zwei der Hydraulikzylinder über eine gemeinsame Druckleitung und weitere zwei der Hydraulikzylinder über eine gemeinsame Rückleitung mit dem Hydraulikaggregat verbunden.

Die Druckleitung und/oder die Rückleitung können jeweils einen separaten Druckspeicher aufweisen und/oder einen Druckspeicher bilden.

Beispielsweise können die Hydraulikzylinder, welche für die Hin-Bewegung in X-Richtung sowie die Hin-Bewegung in Y-Richtung zuständig sind, mit der Druckleitung verbunden sein. Die Hydraulikzylinder, welche für die Rück-Bewegung in X-Richtung sowie die Rück-Bewegung in Y-Richtung zuständig sind, können mit der Rückleitung verbunden sein.

Die Hydraulikleitung, z.B. die Druckleitung und/oder Rückleitung, kann beispielsweise eine oder mehrere T-Abzweigungen aufweisen.

Es liegt quasi ein hydraulisches Bussystem vor.

Dadurch, dass aus einer Hydraulikleitung Abzweigungen möglich sind, kann die Anzahl an Hydraulikleitungen reduziert werden. So muss nicht für jeden Hydraulikzylinder eine separate Hydraulikleitung eingesetzt werden. Auf diese Weise wird z.B. der Wartungsaufwand vermindert.

Zudem können auch mehrere Achsspieltestvorrichtungen über dieselben Hydraulikleitungen miteinander verbunden werden.

Gemäß einer weiteren Ausführungsform weist die Achsspieltestvorrichtung eine Ansteuerungselektronik auf.

Bevorzugt ist die Ansteuerungselektronik ein Teil der Achsspieltestvorrichtung-Baugruppe. Die Achsspieltestvorrichtung weist folglich eine Intelligenz auf.

Durch die Ansteuerungselektronik kann vorzugsweise das Ventil gesteuert werden.

Wird das Ventil geöffnet, so wird aufgrund des Druckspeichers der entsprechende Hydraulikzylinder unmittelbar betätigt.

Nach einer weiteren Ausführungsform weist die Ansteuerungselektronik einen Busanschluss, vorzugsweise zur Datenübertragung, auf.

Der Busanschluss kann drahtgebunden und/oder drahtlos erfolgen.

Beispielsweise können kabellose Übertragungstechniken wie UMTS, GSM, LTE, z.B. LTE-Advanced oder LTE-Advanced Pro, W-CDMA, z.B. HSPA, 3G, 4G, 5G, 6G, Bluetooth, Infrarot, WLAN, z.B. WiFi, ZigBee, NFC, Wibree, WiMAX, IrDA, optischer Richtfunk oder dergleichen zur Datenübertragung eingesetzt werden.

Über das Bussystem können auch mehrere Achsspieltestvorrichtungen miteinander verbunden werden.

Gemäß einer weiteren Ausführungsform weist die Ansteuerungselektronik wenigstens einen Eingang für einen Zusatzsensor auf.

Bei dem Zusatzsensor kann es sich z.B. um einen Temperatursensor, beispielsweise zum Messen der Umgebungstemperatur und/oder der Temperatur des Ventils, einen Ventilstrommesser, einen Wegmesser, einen Bewegungszähler, einen Positionssensor, ein Radar, einen Zeitmesser, beispielsweise Betriebsstundenzähler, einen Spannungsmesser, einen Strommesser, ein Potentiometer und/oder einen Kraft- und/oder Gewichtssensor handeln.

Beispielsweise kann der Gewichtssensor als Dehnungssensor ausgebildet sein. Vorzugsweise umfasst der Dehnungssensor eine Anordnung aus Dehnungsmessstreifen. Es können vorzugsweise mehrere, z.B. zwei oder vier, Dehnungsmessstreifen vorgesehen sein. Beispielsweise können mehrere Dehnungsmessstreifen eine Halbbrücke oder Vollbrücke bilden. Bevorzugt umfasst der Dehnungssensor zwei Vollbrücken. Die Messgenauigkeit wird dadurch erhöht.

Die Achsspieltestvorrichtung kann auf diese Weise zusätzliche Daten empfangen und/oder auswerten.

Die Erfindung betrifft auch eine Anordnung mit wenigstens zwei, drei, vier, fünf, sechs, sieben oder acht erfindungsgemäßen Achsspieltestvorrichtungen und einem gemeinsamen Hydraulikaggregat.

Auf diese Weise können mehrere Räder des Fahrzeugs gleichzeitig getestet werden. Dies beschleunigt den Testvorgang und reduziert somit die Kosten.

Die Achsspieltestvorrichtungen können kaskadenartig angeordnet sein. Mehrere, vorzugsweise alle, Achsspieltestvorrichtungen können über das gemeinsame Hydraulikaggregat betrieben werden. Hierzu kann die Hydraulikleitung T-Abzweigungen aufweisen. Alternativ sind auch mehrere Hydraulikaggregate denkbar.

Mehrere, vorzugsweise alle, Achsspieltestvorrichtungen können an ein gemeinsames Bussystem angeschlossen sein.

Vorzugsweise können mehrere, vorzugsweise alle, Achsspieltestvorrichtungen über eine gemeinsame Steuerung gesteuert werden.

Die Erfindung betrifft auch ein Verfahren zum Testen des Achsspiels eines Fahrzeugs, vorzugsweise Lastkraftwagens, mit einer erfindungsgemäßen Achsspieltestvorrichtung, bei dem das Ventil geöffnet und der Hydraulikzylinder unmittelbar über den Druckspeicher betätigt wird.

Die Ansteuerung kann beispielsweise über eine Fernbedienung, welche z.B. eine Taschenlampe, beispielsweise mit LEDs, aufweisen kann, erfolgen. Sind mehrere Achsspieltestvorrichtungen vorgesehen, können diese vorzugsweise über dieselbe Fernbedienung angesteuert werden.

Mit der Fernbedienung können verschiedene Programme angefahren werden. Beispielsweise können unterschiedliche Testabläufe installiert sein.

Alle hier beschriebenen Ausführungsformen und Bauteile der Vorrichtung sind vorzugsweise dazu ausgebildet, z.B. mittels einer Steuerungsvorrichtung, nach dem hier beschriebenen Verfahren betrieben zu werden. Ferner können alle hier beschriebenen Ausführungsformen der Vorrichtung sowie alle hier beschriebenen Ausführungsformen des Verfahrens jeweils miteinander kombiniert werden, vorzugsweise auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine schematische Darstellung einer Ausführungsform einer Anordnung mit zwei Achsspieltestvorrichtungen gemäß dem Stand der Technik,
- Fig. 2: eine schematische Darstellung einer Ausführungsform einer erfindungsgemäßen Anordnung mit vier Achsspieltestvorrichtungen,
- Fig. 3: den Druckverlauf einer Achsspieltestvorrichtung gemäß Fig. 1, und
- Fig. 4: den Druckverlauf einer Achsspieltestvorrichtung gemäß Fig. 2.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Beispielsweise kann die Anzahl an Achsspieltestvorrichtungen, Hydraulikzylindern und/oder Hydraulikaggregaten beliebig sein.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

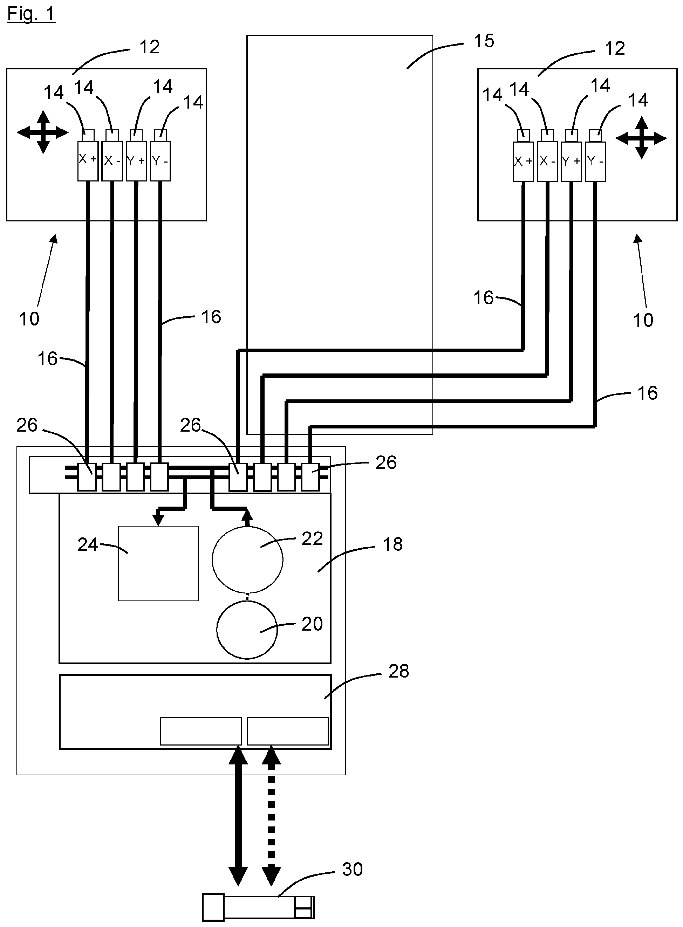

Fig. 1 zeigt eine schematische Darstellung einer Ausführungsform einer Anordnung mit zwei Achsspieltestvorrichtungen 10 gemäß dem Stand der Technik.

Jede Achsspieltestvorrichtung 10 weist eine Auflage 12 für einen Reifen eines Fahrzeugs auf.

Jede Auflage 12 ist über eine nicht dargestellte Lagerung derart gelagert, dass jedenfalls Bewegungen in X- und Y-Richtung möglich sind, was mit den gekreuzten Doppelpfeilen angedeutet ist.

Über vier Hydraulikzylinder 14 kann die Auflage 12 in X- und Y-Richtung bewegt werden.

Die beiden Achsspieltestvorrichtungen 10 können an unterschiedlichen Seiten einer Grube 15 angeordnet sein. Auf diese Weise können beispielsweise Reifen, welche sich auf derselben Achse befinden, getestet werden.

Falls das Achsspiel weiterer Reifen getestet werden soll, muss das Fahrzeug bewegt werden. Dies ist mit zusätzlicher Zeit und somit Kosten verbunden.

Die Achsspieltestvorrichtungen 10 sind über Hydraulikleitungen 16 mit einem Hydraulikaggregat 18 verbunden. Hierbei weist jeder Hydraulikzylinder 14 eine separate Hydraulikleitung 16 auf.

Das Hydraulikaggregat 18 weist einen, vorzugsweise elektrischen, Motor 20, eine Pumpe 22 sowie einen Tank 24 für eine Hydraulikflüssigkeit auf.

Jeder Hydraulikleitung 16 ist ein separates Ventil 26 zugeordnet. Wird das Ventil 26 geöffnet, so kann über das Hydraulikaggregat 18 Druck in der Hydraulikleitung 16 aufgebaut werden, um den Hydraulikzylinder 14 zu bewegen.

Die Ventile 26 sind unmittelbar am Hydraulikaggregat 18 und/oder vor den Hydraulikleitungen 16 angeordnet.

Es ist eine Steuerungsvorrichtung 28 vorgesehen, welche das Hydraulikaggregat 18 und/oder die Ventile 26 steuert.

Die Steuerungsvorrichtung 28 kann drahtgebunden oder drahtlos mit einer Fernbedienung 30 verbunden sein. Die Fernbedienung 30 kann vorzugsweise eine Taschenlampe aufweisen.

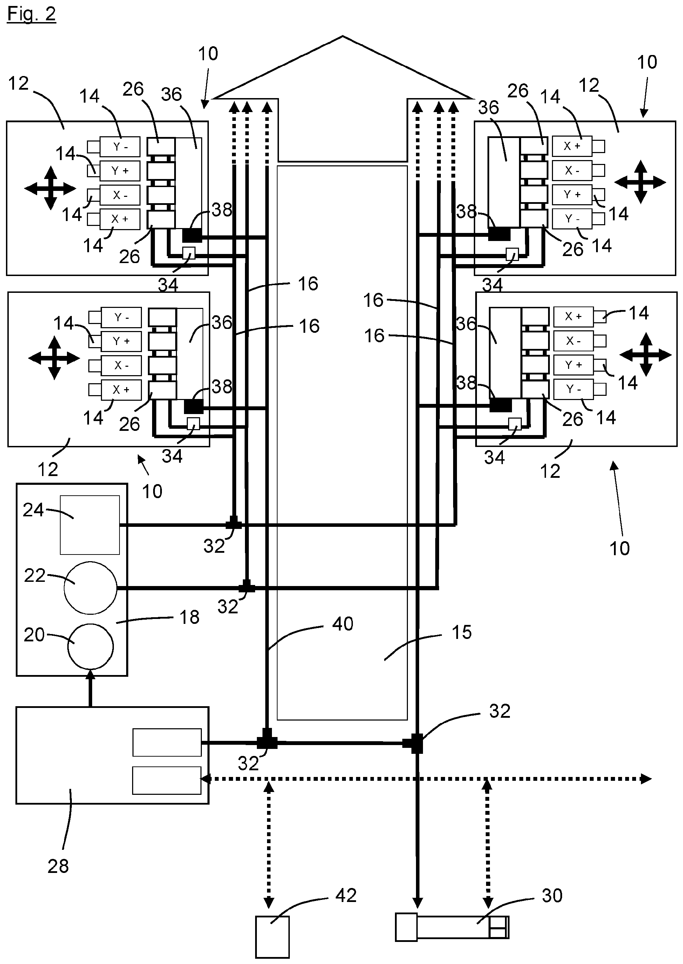

In Fig. 2 sind beispielhaft vier Achsspieltestvorrichtungen 10 dargestellt.

Sämtliche Achsspieltestvorrichtungen 10 werden über ein gemeinsames Hydraulikaggregat 18 betrieben. Alternativ können auch mehrere Hydraulikaggregate 18, beispielsweise für je zwei gegenüberliegende Achsspieltestvorrichtungen 10 oder für diejenigen Achsspieltestvorrichtungen 10, die auf derselben Seite der Grube 15 angeordnet sind, vorgesehen sein.

Vom Hydraulikaggregat 18 aus erstrecken sich lediglich zwei Hydraulikleitungen 16, nämlich eine Druckleitung und eine Rückleitung.

Über Abzweigungen 32 kann die Hydraulikflüssigkeit zu den jeweiligen Achsspieltestvorrichtungen 10 bzw. Hydraulikzylindern 14 geleitet werden.

Auf diese Weise können Hydraulikleitungen 16 eingespart werden.

Die Achsspieltestvorrichtungen 10 weisen jeweils Ventile 26 auf. Die Ventile 26 sind unmittelbar vor den Hydraulikzylindern 14 angeordnet

Zudem können die Achsspieltestvorrichtungen 10 optional einen oder mehrere separate Druckspeicher 34 aufweisen. Die Druckspeicher 34 können beispielsweise als Federspeicher ausgebildet sein. Vorzugsweise können die Druckspeicher 34 jeweils ein Rückschlagventil aufweisen, welches bei Bedarf geöffnet werden kann. Alternativ oder zusätzlich können die Druckspeicher 34 auch durch die Hydraulikleitungen 16 gebildet werden.

Durch die Druckspeicher 34 sowie den nach den Druckspeichern 34 angeordneten Ventilen 26 wird erreicht, dass die Hydraulikzylinder 14 unmittelbar angesprochen werden können. So muss zur Betätigung der Hydraulikzylinder 14 nicht erst Druck in den Hydraulikleitungen 16 aufgebaut werden.

Die Achsspieltestvorrichtungen 10 weisen jeweils eine Ansteuerungselektronik 36 mit einem Busanschluss 38 auf. Somit kann die Ansteuerungselektronik 36 über ein (Daten-)Bussystem 40 mit einer Steuerungsvorrichtung 28 und/oder einer Fernbedienung 30 verbunden werden.

Die Steuerungsvorrichtung 28 kann optional auch mit einer Empfangsvorrichtung 42, z.B. einem Tablet-PC oder Smartphone, verbunden sein.

Über die Fernbedienung 30 kann beispielsweise ein Testprogramm ausgelöst werden. Die Hydraulikzylinder 14 einer Achsspieltestvorrichtungen 10 können dabei hin und her bewegt werden, um auf diese Weise das Achsspiel eines Fahrzeugs zu testen.

Die Hydraulikzylinder 14 reagieren hierbei unmittelbar, da die Ventile 26 erst nach den unter Druck stehenden Hydraulikleitungen 16 und/oder dem Druckspeicher 34 angeordnet sind.

Grundsätzlich können beliebig viele Achsspieltestvorrichtungen 10 vorgesehen sein. So kann sich das zu testende Fahrzeug gleichzeitig auf mehreren Achsspieltestvorrichtungen 10 befinden. So können die einzelnen Reifen des Fahrzeugs nacheinander getestet werden, ohne das Fahrzeug bewegen zu müssen.

Dadurch, dass sämtliche Achsspieltestvorrichtungen 10 an denselben Hydraulikleitungen 16 und/oder demselben Bussystem 40 angeordnet sind, ist eine Erweiterung um zusätzliche Achsspieltestvorrichtungen 10 auf einfache Weise möglich.

Auch können sämtliche Achsspieltestvorrichtungen 10 mittels derselben Fernbedienung 30 gesteuert werden.

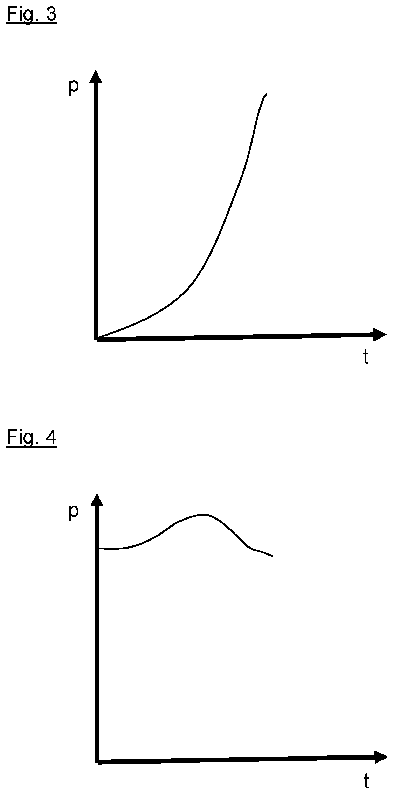

In Fig. 3 ist der Verlauf des Drucks p am Hydraulikzylinder 14 über die Zeit t einer herkömmlichen Achsspieltestvorrichtung 10 dargestellt.

Die Kurve steigt zunächst vergleichsweise langsam an, da in den Hydraulikleitungen 16 der Druck aufgebaut werden muss. Dies führt zu verlangsamten Reaktionszeiten der Hydraulikzylinder 14.

Fig. 4 zeigt den Verlauf des Drucks p am Hydraulikzylinder 14 über die Zeit t einer erfindungsgemäßen Achsspieltestvorrichtung 10. Da die Hydraulikleitung 16 bereits unter Druck steht, kann der Hydraulikzylinder 14 unmittelbar betätigt werden. Nachdem sich der Druck im Druckspeicher 34 bzw. in der Hydraulikleitung 16 abgebaut hat, fällt der Druck p etwas ab.

### Bezugszeichenliste

- 10: Achsspieltestvorrichtung
- 12: Auflage
- 14: Hydraulikzylinder
- 15: Grube
- 16: Hydraulikleitung
- 18: Hydraulikaggregat
- 20: Motor
- 22: Pumpe
- 24: Tank
- 26: Ventil
- 28: Steuerungsvorrichtung
- 30: Fernbedienung
- 32: Abzweigungen
- 34: Druckspeicher
- 36: Ansteuerungselektronik
- 38: Busanschluss
- 40: Bussystem
- 42: Empfangsvorrichtung

- p: Druck
- t: Zeit

## Patentansprüche

1. Achsspieltestvorrichtung (10) zum Testen des Achsspiels eines Fahrzeugs, vorzugsweise Lastkraftwagens, aufweisend
eine Auflage (12) für einen Reifen des Fahrzeugs,
eine Lagerung für die Auflage (12),
wenigstens einen mit einem Hydraulikaggregat (18) verbundenen oder verbindbaren Hydraulikzylinder (14) zum Bewegen der Auflage (12),
zumindest einen Druckspeicher (34) zum unmittelbaren Betätigen des Hydraulikzylinders (14) und
ein Ventil (26), das zwischen dem Druckspeicher (34) und dem Hydraulikzylinder (14) angeordnet ist,
**dadurch gekennzeichnet,**
**dass** das Ventil (26) unmittelbar vor dem Hydraulikzylinder (14) angeordnet ist.

2. Achsspieltestvorrichtung (10) nach Anspruch 1 ,
**dadurch gekennzeichnet,**
**dass** der Druckspeicher (34) als Federspeicher ausgebildet ist.

3. Achsspieltestvorrichtung (10) nach einem der vorhergehenden Ansprüche,
**dadurch gekennzeichnet,**
**dass** wenigstens oder genau zwei, drei oder vier Hydraulikzylinder (14) vorgesehen sind.

4. Achsspieltestvorrichtung (10) nach Anspruch 3,
**dadurch gekennzeichnet,**
**dass** zwei der Hydraulikzylinder (14) über eine gemeinsame Druckleitung (16) und weitere zwei der Hydraulikzylinder (14) über eine gemeinsame Rückleitung (16) mit dem Hydraulikaggregat (18) verbunden sind.

5. Achsspieltestvorrichtung (10) nach einem der vorhergehenden Ansprüche,
**dadurch gekennzeichnet,**
**dass** die Achsspieltestvorrichtung (10) eine Ansteuerungselektronik (36) aufweist.

6. Achsspieltestvorrichtung (10) nach Anspruch 5,
**dadurch gekennzeichnet,**
**dass** die Ansteuerungselektronik (36) einen Busanschluss (38) aufweist.

7. Achsspieltestvorrichtung (10) nach Anspruch 5 oder 6,
**dadurch gekennzeichnet,**
**dass** die Ansteuerungselektronik (36) wenigstens einen Eingang für einen Zusatzsensor aufweist.

8. Anordnung mit wenigstens zwei, drei, vier, fünf, sechs, sieben oder acht Achsspieltestvorrichtungen (10) nach einem der vorhergehenden Ansprüche und einem gemeinsamen Hydraulikaggregat (18).

9. Verfahren zum Testen des Achsspiels eines Fahrzeugs, vorzugsweise Lastkraftwagens, mit einer Achsspieltestvorrichtung (10) nach einem der vorhergehenden Ansprüche, bei dem
das Ventil (26) geöffnet und der Hydraulikzylinder (14) unmittelbar über den Druckspeicher (34) betätigt wird.

## Claims

1. Axle play testing device (10) for testing the axle play of a vehicle,
preferably a truck, comprising
a support (12) for a tyre of the vehicle,
a bearing for the support (12), and
at least one hydraulic cylinder (14) connected or connectable to a hydraulic unit (18) for the purpose of moving the support (12),
at least one pressure accumulator (34) for directly actuating the hydraulic cylinder (14), and
a valve (26), which is arranged between the pressure accumulator (34) and the hydraulic cylinder (14),
**characterised in that**
the valve (26) is arranged directly in front of the hydraulic cylinder (14).

2. Axle play testing device (10) in accordance with claim 1,
**characterised in that**
the pressure accumulator (34) is designed as a spring-loaded accumulator.

3. Axle play testing device (10) according to any of the preceding claims,
**characterised in that**
at least or precisely two, three or four hydraulic cylinders (14) are provided.

4. Axle play testing device (10) in accordance with claim 3,
**characterised in that**
two of the hydraulic cylinders (14) are connected to the hydraulic unit (18) via a common pressure line (16) and a further two of the hydraulic cylinders (14) are connected to the hydraulic unit (18) via a common return line (16).

5. Axle play testing device (10) in accordance with any of the preceding claims,
**characterised in that**
the axle play testing device (10) has control electronics (36).

6. Axle play testing device (10) in accordance with claim 5,
**characterised in that**
the control electronics (36) have a bus connection (38).

7. Axle play testing device (10) in accordance with claim 5 or 6,
**characterised in that**
the control electronics (36) have at least one input for an additional sensor.

8. Arrangement comprising at least two, three, four, five, six, seven or eight axle play testing devices (10) in accordance with any of the preceding claims and a common hydraulic unit (18).

9. Method for testing the axle play of a vehicle, preferably a truck, with an axle play testing device (10) in accordance with any of the preceding claims, in which
the valve (26) is opened and the hydraulic cylinder (14) is actuated directly via the pressure accumulator (34).

## Revendications

1. Dispositif (10) de test du jeu des essieux pour tester le jeu des essieux d'un véhicule, de préférence d'un camion, comprenant
un support (12) pour un pneu du véhicule,
un palier pour le support (12),
au moins un vérin hydraulique (14) relié ou pouvant être relié à un groupe hydraulique (18) pour déplacer le support (12),
au moins un accumulateur de pression (34) pour l'actionnement direct du vérin hydraulique (14), et
une vanne (26) qui est disposée entre l'accumulateur de pression (34) et le vérin hydraulique (14),
**caractérisé en ce que**
la vanne (26) est disposée directement devant le vérin hydraulique (14).

2. Dispositif (10) de test du jeu des essieux selon la revendication 1,
**caractérisé en ce que**
l'accumulateur de pression (34) est conçu comme un accumulateur à ressort.

3. Dispositif (10) de test du jeu des essieux selon l'une des revendications précédentes,
**caractérisé en ce que**
il est prévu au moins ou exactement deux, trois ou quatre vérins hydrauliques (14).

4. Dispositif (10) de test du jeu des essieux selon la revendication 3,
**caractérisé en ce que**
deux des vérins hydrauliques (14) sont reliés au groupe hydraulique (18) par une conduite de pression commune (16) et deux autres des vérins hydrauliques (14) y sont reliés par une conduite de retour commune (16).

5. Dispositif (10) de test du jeu des essieux selon l'une des revendications précédentes,
**caractérisé en ce que**
le dispositif (10) de test du jeu des essieux comprend une électronique de commande (36).

6. Dispositif (10) de test du jeu des essieux selon la revendication 5,
**caractérisé en ce que**
l'électronique de commande (36) comprend une connexion de bus (38).

7. Dispositif (10) de test du jeu des essieux selon la revendication 5 ou 6,
**caractérisé en ce que**
l'électronique de commande (36) présente au moins une entrée pour un capteur supplémentaire.

8. Ensemble comprenant au moins deux, trois, quatre, cinq, six, sept ou huit dispositifs (10) de test du jeu des essieux selon l'une des revendications précédentes et un groupe hydraulique commun (18).

9. Procédé pour tester le jeu des essieux d'un véhicule, de préférence d'un camion, avec un dispositif (10) de test du jeu des essieux selon l'une des revendications précédentes, dans lequel
la vanne (26) est ouverte et le vérin hydraulique (14) est actionné directement par l'intermédiaire de l'accumulateur de pression (34).
